# EUROPEAN PATENT APPLICATION

(11) **EP 2 829 750 A1**
(43) Date of publication of application: **28.01.2015**
(21) Application number: 13178263.3
(22) Date of filing: 26.07.2013
(51) Int. Cl.: F16C 17/06, F16C 27/08

(54) **A Slide Thrust Bearing**

(71) Applicant: ABB Oy, 00380 Helsinki (FI)
(72) Inventor: Kock, Juho, FI-00980 Helsinki (FI); Pellinen, Petri, FI-00980 Helsinki (FI)

(57) **Abstract**

A slide thrust bearing arrangement comprising a housing, a thrust surface attached to a shaft, the thrust surface comprising a sliding surface perpendicular to the center axis of the shaft, a plurality of sliding pads fixed to the housing with fastening means, wherein each sliding pad has a sliding surface facing to the thrust surface, the fastening means comprising a resilient element causing the sliding pad to brace against the thrust surface. The resilient element comprises a first component/portion that compresses elastically when a force lower than a predefined force is bracing the sliding pad in the axial direction of the shaft, and at least a second component/portion that compresses elastically when a force higher than the first force is bracing the sliding pad in the axial direction of the shaft.

## Description

### FIELD OF THE INVENTION

The present invention relates to a slide thrust bearing arrangment according to preamble of independent claim 1.

### BACKGROUND OF THE INVENTION

The slide thrust bearing are used to support a rotating shaft in the axial direction. The slide thrust bearing arrangement consists of a sliding pad that is attached to a housing of the bearing. The sliding pad has a sliding surface that leans against a thrust surface attached to the shaft. Further, the arrangement comprises compression means that push the sliding pad towards the thrust surface. Thereby the sliding surface is in contact with the thrust surface and the slide thrust bearing supports the shaft when the sliding surface wears and when there are some unevenness in the contact surfaces.

One example of slide thrust bearing with compression means is presented in US Patent US 5765951. The document discloses a disk-shaped compression spring that equalizes the level differences between a sliding surface of the sliding pad and a trust surface attached to the shaft.

One application of the slide thrust bearing is propulsion devices, where the propeller shaft is supported in axial direction with a slide thrust bearing. The slide thrust bearing has preload springs attached to the sliding pads, in order to compensate for shaft flange deformations. The preload springs are also compensating misalignment of the shaft line.

Spring stiffness of the slide pad is optimized for normal operational loads. During normal operation, the shaft line is supported by the pad preload springs and the force distribution between pads is relatively even. During normal operation, when the shaft flange deformations are low, the shaft line is sufficiently supported by the pad preload springs and the force distribution between pads is relatively even.

When high lateral, horizontal or vertical, forces and/or bending moments occur, the shaft line bends, causing relative misalignment between support flange and the bearing housing. This results in asymmetrical pad force distribution. This kind of situation can happen for example in a blade break situation, and the classification societies have requirements that need to be fulfilled.

When the shaft bending exceeds a certain value, the pad preload springs at the maximum translation locations bottom and at these points most of the load is carried by those sliding pads. This causes high forces to the sliding pads at these locations and damages the sliding pads when crushing the white metal.

### BRIEF DESCRIPTION OF THE INVENTION

An object of the present invention is to provide a slide trust bearing to overcome the above problems. The object of the invention is achieved by a slide thrust bearing arrangement characterized by what is stated in the independent claim. The preferred embodiments of the invention are disclosed in the dependent claims.

### BRIEF DESCRIPTION OF THE DRAWINGS

In the following the invention will be described in greater detail by means of preferred embodiments with reference to the accompanying drawings, in which
Figure 1 shows a cross section of propulsion arrangement;
Figure 2 shows a cross section of the shaft line;
Figure 3 shows a support flange of the shaft line; and
Figure 4 shows pad force distribution
Figure 5 shows spring force versa displacement
Figure 6 shows a spring according to invention.

### DETAILED DESCRIPTION OF THE INVENTION

The resilient element has low spring constant at low loads but has a higher spring constant at high loads, in other words, progressive behavior. This enables operation within the controlled elasticity range without bottoming and with considerably lower translations that would be needed if linear resilient elements were utilized.

The resilient element may consist of a number of spring elements in suit-able configuration, or be a single spring element. This can be achieved by one or multiple combinations of following principles:
1) A single spring element has progressive behaviour. For example, a disc spring with specific section profile, or a coil spring designed to have a progressive spring constant.
2) Spring elements are arranged in series in such a way that the spring constant change is continuous with the load change (For example springs with different spring constants stacked on top of each other)
3) Spring elements are arranged in series in such a way that the spring constant change is step-like with the load change (For example springs with different spring constants stacked next to each other in such a way, that with low loads only the less stiff spring pack is active).

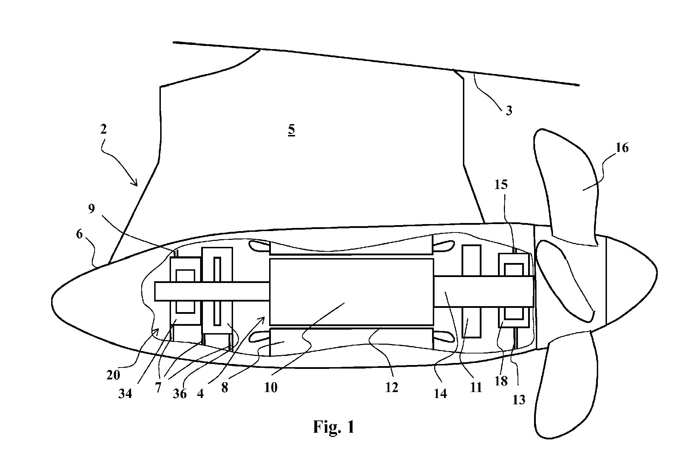

   Figure 1 shows a cross section of propulsion arrangement as an example of an environment where the invention ii utilized

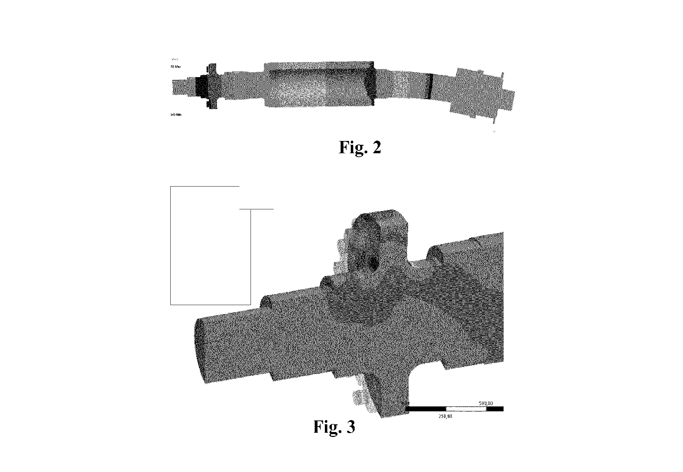

   Figure 2 shows a cross section of the shaft line of the propropeller. The bending of the shaft is emphasized.
   Figure 3 shows a support flange of the shaft line to illustrate a relative misalignment between support flange and the bearing housing.

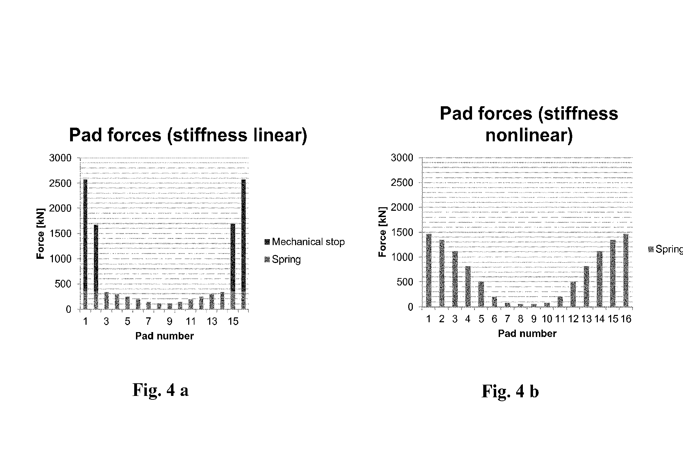

   Figure 4a shows pad force distribution of the conventional solution and Figure shows a pad force distribution according to invantion

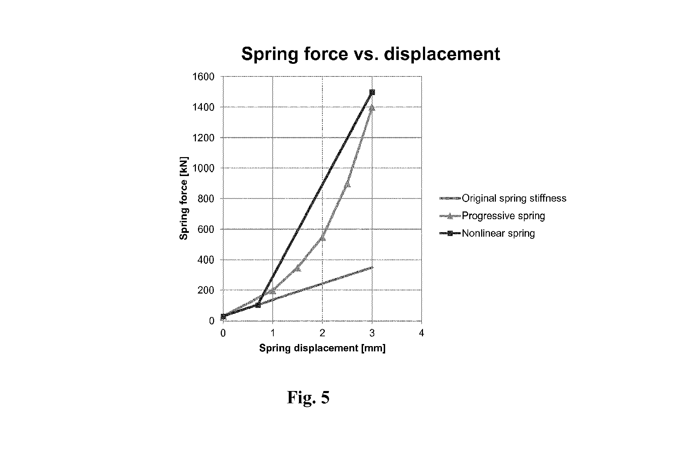

   Figure 5 shows spring force versa displacement when conventional spring is used and when a progressive spring according to invention or a nonlinear spring according to invention.

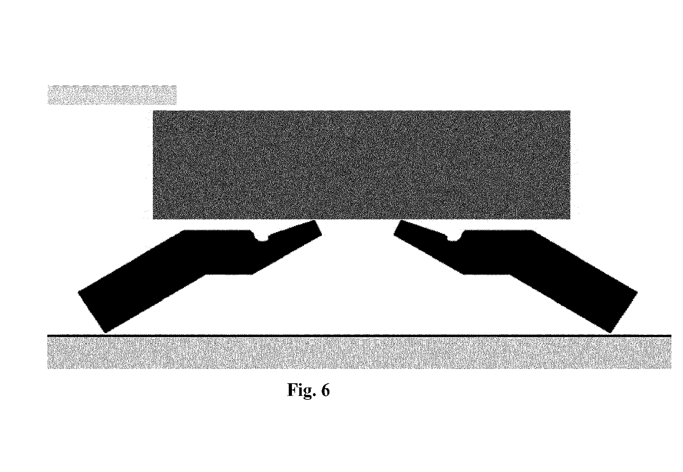

   Figure 6 shows an example of a progressive spring according to invention. The non linear spring can be a pyramid-like, a set of springs with different stiffness, for example

## Claims

1. A slide thrust bearing arrangement comprising
a housing,
a thrust surface attached to a shaft, the thrust surface comprising a sliding surface perpendicular to the center axis of the shaft,
a plurality of sliding pads fixed to the housing with fastening means, wherein each sliding pad has a sliding surface facing to the thrust surface,
the fastening means comprising a resilient element causing the sliding pad to brace against the the thrust surface,
**characterized in that**
the resilient element comprises a first component/portion that compresses elastically when a force lower than a predefined force is bracing the sliding pad in the axial direction of the shaft, and
at least a second component/portion that compresses elastically when a force higher than the first force is bracing the sliding pad in the axial direction of the shaft.

2. An arrangement according to the claim 1, **characterized in that** the sliding pads are evenly spread around the center axis of the shaft.

3. An arrangement according to the claim 1, **characterized in that** the first component consists of a first spring and the second component consist of a second spring whereby the second spring is stiffer than the first spring.

4. An arrangement according to the claim 1, **characterized in that** elasticity the resilient element increases progressively between the first and the second component.

5. An arrangement according to the claim 1, **characterized in that** the sliding surfaces of the sliding pads are evenly bracing against the thrust surface.
